# Europäisches Patentamt

## European Patent Office
## Office européen des brevets

(19)

(11) Veröffentlichungsnummer: **0 047 419**
**B1**

(12) **EUROPÄISCHE PATENTSCHRIFT**

(45) Veröffentlichungstag der Patentschrift:
**18.04.84**

(21) Anmeldenummer: **81106532.5**

(22) Anmeldetag: **22.08.81**

(51) Int. Cl.³: **C 08 J 11/04**, C 08 G 18/70, C 08 J 3/08, C 08 L 75/04

(54) Verfahren zur Herstellung von flüssigen Gemischen von Isocyanatgruppen aufweisenden Verbindungen, sowie ihre Verwendung als Aufbaukomponente bei der Herstellung von Polyurethankunststoffen.

(30) Priorität: **04.09.80 DE 3033330**

(43) Veröffentlichungstag der Anmeldung:
**17.03.82 Patentblatt 82/11**

(45) Bekanntmachung des Hinweises auf die Patenterteilung:
**18.04.84 Patentblatt 84/16**

(84) Benannte Vertragsstaaten:
**BE DE FR GB**

(56) Entgegenhaltungen:
**DE - A - 2 035 175**
**DE - C - 962 649**

**Patents Abstracts of Japan, Band 4, Nr. 38, 27. März 1980, Seite 88C4**

(73) Patentinhaber: **BAYER AG, Konzernverwaltung RP Patentabteilung, D-5090 Leverkusen 1 Bayerwerk (DE)**

(72) Erfinder: **Stemmler, Ingo, Dr., Buschweg 21, D-5068 Odenthal 2 (DE)**
Erfinder: **Müller, Hanns-Peter, Dr., Im Kerberich 6, D-5068 Odenthal (DE)**
Erfinder: **Wagner, Kuno, Dr., Am Kiesberg 8, D-5090 Leverkusen (DE)**

EP 0 047 419 B1

**Verfahren zur Herstellung von flüssigen Gemischen von Isocyanatgruppen aufweisenden Verbindungen, sowie ihre Verwendung als Aufbaukomponente bei der Herstellung von Polyurethankunststoffen**

Die vorliegende Erfindung betrifft ein neues Verfahren, welches die Überführung von Polyurethanabfällen oder von Polyurethan-Ausschussware in wiederverwendbare Polyisocyanate gestattet, wobei diese Polyisocyanate in Form von flüssigen Gemischen mit üblicherweise bei der Herstellung von Polyurethanen eingesetzten Polyisocyanaten anfallen, sowie die Verwendung dieser flüssigen Gemische als Isocyanatkomponente bei der Herstellung von Polyurethankunststoffen nach dem Isocyanat-Additionsverfahren.

Mit dem starken Anwachsen der polyurethanerzeugenden Industrie ist auch das Problem der Beseitigung und Wiederverwertung von Polyurethanabfällen bzw. Polyurethanausschussware gestiegen. Für Flocken aus Polyurethanweichschaum wurde zwar ein Markt durch Zusammenkleben des Flockenmaterials zu Verbundkörpern gefunden, doch kann auf diese Weise nur eine begrenzte Menge an Weichschaumstoffmaterialien verwertet werden.

Für Abfälle aus halbharten und harten Polyurethanschaumstoffen sowie für Elastomergranulate besteht dagegen keine ähnliche Verwendungsmöglichkeit. Es müssen daher grosse Mengen an Polyurethanabfall- und Polyurethanausschussware aus der Hart- und Weichschaumproduktion sowie der Elastomerproduktion auf Deponien gelagert oder in Müllverbrennungsanlagen vernichtet werden. Dabei entstehen in Folge des geringen spezifischen Gewichts und, damit verbunden, des grossen Volumens der Abfall- bzw. Ausschussware erhebliche ökologische, technische und wirtschaftliche Probleme.

Es besteht daher aus ökologischen und ökonomischen Gründen ein erhebliches Interesse, die ständig anwachsenden Mengen an Polyurethanabfällen einer wirtschaftlichen Wiederverwertung zuzuführen.

Aus den deutschen Offenlegungsschriften 2 362 919, 2 362 920 und 2 362 921 sind Verfahren bekannt geworden, zu diesem Zweck Polyurethanschaumstoffabfälle bei hohen Temperaturen mit Wasserdampf zu hydrolysieren. Diese Verfahren erfordern jedoch hohe Temperaturen und Drucke (beispielsweise 240 °C und 40 Atm.), so dass die Aufspaltung der Polyurethanabfälle auf diese Weise nur mit grossem apparativen Aufwand und unter hohen Kosten betrieben werden kann. Die Umsetzungsprodukte fallen darüber hinaus im Gemisch mit Wasser an, so dass sie vor der Wiederverwendung noch durch spezielle Verfahren abgetrennt werden müssen.

Es ist ferner bekannt (DE-OS 2 238 109), Polyurethanschaumstoffabfälle durch Erhitzen auf 175°–250 °C in hochsiedenden Dihydroxyverbindungen, bevorzugt Diethylenglykol, und vorteilhaft in Gegenwart von ca. 10% eines Diethanolamins zu wiederverschäumbaren Polyolen abzubauen. Durch Umurethanisierung werden auf diese Weise kurzkettige Polyole gewonnen, die vorteilhaft nur zur Herstellung von Polyurethanhartschäumen eingesetzt werden können. Nach der Lehre der zitierten Offenlegungsschrift wendet man das Verfahren vorzugsweise nur für die Aufspaltung von Polyurethanhartschaumstoffen an. Nachteilig bei diesem Verfahren ist auch, dass der Endpunkt der Reaktion erst nach mehreren Stunden eintritt. Das Verfahren verbraucht daher viel Energie und lässt sich nur schlecht auf kontinuierliche Anlagen übertragen.

Die DE-OS 2 035 175 lehrt insbesondere in den Beispielen 10 bis 14, Polyurethan-Abfall in monomeren Diisocyanaten bei ca. 140–160 °C zu lösen, und die so erhaltenen Lösungen als Isocyanat-Komponente bei der Herstellung von Polyurethankunststoffen einzusetzen. Wie aus den genannten Ausführungsbeispielen der DE-OS 2 035 175 und auch aus den nachstehenden Vergleichsbeispielen zu den erfindungsgemässen Beispielen ersichtlich, ist die Herstellung dieser Lösungen nur unter einem hohen Zeitaufwand und dadurch bedingt mit einem hohen Energieverbrauch möglich. Ein nennenswerter Abbau der Abfall-Polyurethane findet hierbei nicht statt. Dies hat zur Folge, dass es sich bei den Lösungen der DE-OS 2 035 175 um vergleichsweise hochviskose Gemische handelt, deren Einsatzmöglichkeiten bei der Herstellung von Polyurethankunststoffen schon hierdurch stark beschränkt sind. Ausserdem können nach dem Verfahren der DE-OS 2 035 175 hochverzweigte Polyurethane nicht gelöst werden. Die zunächst entstehenden hochviskosen Lösungen weisen zudem of den gravierenden Nachteil auf, schon nach kurzem Lagern bei Raumtemperatur zu einem Feststoff zu erstarren (vgl. hierzu die nachfolgenden Beispiele 1–5, sowie die entsprechenden Vergleichsbeispiele).

Es war somit die Aufgabe der vorliegenden Erfindung, ein Verfahren zur Verfügung zu stellen, welches die Wiederverwendung von Polyurethanabfällen bzw. von Polyurethanausschussware gestattet, ohne mit den genannten Nachteilen der Verfahren des Standes der Technik behaftet zu sein.

Diese Aufgabe konnte überraschenderweise dadurch gelöst werden, dass die genannten Polyurethane im Gemisch mit üblicherweise bei der Polyurethanherstellung eingesetzten, monomeren Polyisocyanaten in Gegenwart der nachstehend beschriebenen Katalysatoren erhitzt werden.

Dieser Befund ist besonders überraschend und war nicht zu erwarten, da die aufgespalteten Polyurethane basische Katalysatoren der unterschiedlichsten Konstitution – z.B. auch tertiäre Amine – enthalten, welche nicht durch Reaktion mit den Isocyanatgruppen des Lösers desaktiviert werden. Vielmehr beschleunigen solche Katalysatoren erfahrungsgemäss Oligomerisierungs- und Zyklisierungsreaktionen von Isocyanaten, wie z.B. die Bildung von Uretdionen und Isocyanuraten (siehe Houben-Weyl, Methoden der organischen Chemie, Band XIV/2, Seite 64/68). Bei der Dimerisierung und Trimerisierung zwei- und mehrwertiger Isocyanate entstehen aber im Gegensatz zum erfindungsgemässen Verfahren hochviskose bis feste Produkte. Weiterhin ist aus der Literatur bekannt, dass lösliche Verbindungen von Fe, Hg, Ni, Cu, Zn, Al, Sn, V, Ti, Cr die Trimerisation von Isocyanaten katalysieren (J.H. Saunders, K.C. Frisch, Polyurethanes, Chemistry and Technology, Part. I, Seite 94 f, 1962). Hierbei bewirken nicht nur Lewissäuren wie $AlCl_3$ und $AlBr_3$ (Saunders, Frisch s.o. und N.S. Dokunichin, L.A. Gavea, Z. obs, Chim. 29, 297 (1959) ) die Isocyanuratbildung bereits bei Raumtemperatur sondern auch neutrale Organozinnverbindungen. Nach Aussage von A.J. Bloodworth und A.G. Davies, J. Chem. Soc. 1965, 6858 trimerisiert Tributylzinn-ethylat bzw. Bis-tributylzinn-oxid, Methyl-, Ethyl- und Phenylisocyanat ebenfalls bei Raumtemperatur in wenigen Tagen. Es war daher zu erwarten, dass das erfindungsgemässe Verfahren mit zwei- und mehrwertigen Isocyanaten als Löser bei Temperaturen von 100 bis 250 °C in Gegenwart der aus dem aufgeschlossenen Polyurethan freigesetzten Amin- und Metall-Katalysatoren durch den Zusatz weiterer Metallverbindungen zu hochviskosen bzw. festen Produkten führen würde.

Gegenstand der Erfindung ist ein Verfahren zur Herstellung von als Isocyanatkomponente bei der Herstellung von Polyurethankunststoffen geeigneten, bei Raumtemperatur flüssigen Gemischen von Isocyanatgruppen aufweisenden Verbindungen durch Umsetzung von bis zu 70 Gewichtsteilen an Polyurethanen mit 100 Gewichtsteilen an organischen Polyisocyanaten mit einem unter 50 °C liegenden Schmelz- bzw. Erweichungspunkt im Temperaturbereich zwischen 100 und 250 °C, gegebenenfalls unter Anwendung von äusserem Druck, dadurch gekennzeichnet, dass man die Umsetzung in Gegenwart von katalytischen Mengen an sauren oder neutralen Salzen, Phenolaten, Enolaten oder Alkoholaten von Metallen der 3., 4. oder 5. Hauptgruppe oder der 1., 2., 4., 7. oder 8. Nebengruppe des Periodensystems der Elemente durchführt.

Gegenstand der Erfindung ist auch die Verwendung der bei dem erfindungsgemässen Verfahren anfallenden flüssigen Gemische als Isocyanatkomponente bei der Herstellung von Polyurethankunststoffen nach dem Isocyanat-Polyadditionsverfahren.

Bei den beim erfindungsgemässen Verfahren einzusetzenden Polyurethanen handelt es sich um beliebige weiche oder harte, geschäumte oder nichtgeschäumte Polyurethane, insbesondere um Abfälle, wie sie bei der grosstechnischen Herstellung von Polyurethankunststoffen anfallen bzw. um Ausschussware, wie sie bei Fehlpartien in der Polyurethankunststoffe herstellenden Industrie anfallen können.

Für das erfindungsgemässe Verfahren geeignete Polyisocyanate sind alle beliebigen, in der Polyurethanchemie als Ausgangsmaterialien eingesetzten Polyisocyanate mit einem unter 50 °C liegenden Schmelz- bzw. Erweichungspunkt. Vorzugsweise werden beim erfindungsgemässen Verfahren bei Raumtemperatur flüssige Polyisocyanate eingesetzt. Wegen des schmelzpunkterniedrigenden Effekts, der oft bei der Durchführung des erfindungsgemässen Verfahrens beobachtet werden kann, eignet sich die erfindungsgemässe Umsetzung auch zur Verflüssigung von bei Raumtemperatur festen polyisocyanaten wie z.B. von 4,4'-Diisocyanato-diphenylmethan.

Geeignete Polyisocyanate sind beispielsweise aliphatische Diisocyanate wie Hexamethylendiisocyanat, Octamethylendiisocyanat, cycloaliphatische Diisocyanate wie Cyclohexylen-1,4-diisocyanat, Isophorondiisocyanat oder aromatische Polyisocyanate wie 2,4-Diisocyanatotoluol, dessen technischen Gemische mit 2,6-Diisocyanatotoluol, 4,4'-Diisocyanatodiphenylmethan, dessen flüssigen, Carbodiimid-Uretonimin- oder Urethangruppen aufweisenden Modifizierungsprodukte und/oder dessen technischen Gemische mit 2,4'- und gegebenenfalls 2,2'-Diisocyanatodiphenylmethan, sowie die bekannten Phosgenierungsprodukte von Anilin/Formaldehyd-Kondensaten, die neben den genannten Diisocyanato-diphenylmethan-Isomeren höherfunktionelle Polyisocyanate der Diphenylmethan-Reihe aufweisen. Bevorzugt werden beim erfindungsgemässen Verfahren 2,4-Diisocyanatotoluol, dessen technischen Gemische mit 2,6-Diisocyanatotoluol, die zuletzt genannten Phosgenierungsprodukte von Anilin/Formaldehyd-Kondensaten, Isophorondiisocyanat oder Hexamethylendiisocyanat eingesetzt. Besonders bevorzugt werden die genannten Diisocyanatotoluole verwendet. Auch beliebige Gemische der beispielhaft genannten Polyisocyanate können verwendet werden.

Für das erfindungsgemässe Verfahren geeignete Katalysatoren sind beliebige saure oder neutrale, d.h. in wässrigem Milieu nicht basisch reagierende Salze, Phenolate, Enolate oder Alkolate von Metallen der 3., 4. oder 5. Hauptgruppe bzw. der 1., 2., 4., 7. oder 8. Nebengruppe des Periodensystems der Elemente. Die Salze und Enolate sind gegenüber dem Alkolaten und Phenolaten bevorzugt. Besonders bevorzugt werden die entsprechenden Salze oder Enolate des 2- oder 4-wertigen Zinns, des Zinks, des 3-wertigen Eisens oder des 3-wertigen Wismuts eingesetzt.

Beispiele geeigneter Katalysatoren sind

1. Salze anorganischer oder organischer Säuren wie Salzsäure, Bromwasserstoffsäure, Jodwasserstoffsäure, Fluorwasserstoffsäure, Salpetersäure, Schwefelsäure, Phosphorsäure, geradkettigen oder verzweigten Alkancarbonsäuren wie Ameisensäure Essigsäure, Laurylsäure, Stearylsäure, Ethylhexancarbonsäure, Naphthensäuren, ungesättigten Fettsäuren, wie Ölsäure, Elaidinsäure, Sorbinsäure, aromatischen Säuren wie Benzoesäure, Zimtsäure, Anthranilsäure, Salicylsäure und Metallen der obengenannten Art insbesondere Al, Sn (Sn II, Sn IV), Pb (Pb II, Pb IV), Sb, Bi, Cu, Zn, Cd, Hg, Ti, Zr, Mn, Fe, Co, Ni.

2. Phenolate, beispielsweise auf Basis von Phenol, von Isononylphenol oder Nitrophenol, der unter 1. beispielhaft genannten Metalle.

3. Enolate, beispielsweise salzartige Komplexe der unter 1. beispielhaft genannten Metalle mit Acetylessigsäureethylester oder Acetylaceton.

4. Alkoholate beispielsweise auf Basis des Ethanols, Methanols, Isopropanols, N-Butanols, iso-Butanols, tert.-Butanols, n- und iso-Amylalkohols und der unter 1. beispielhaft genannten Metalle oder auch

5. Am Kation organische Substituenten, insbesondere Alkylsubstituenten aufweisende Salze auf Basis der unter 1. beispielhaft genannten Säuren und Metalle wie insbesondere die entsprechenden Zinnverbindungen wie z.B. die entsprechenden Dialkylzinn-Salze organischer Monocarbonsäuren.

Besonders bewährt haben sich Aluminiumacetat, Bleisalze von Naphthensäuren, Bleioctoat, Bleiethylhexoat, Wismutoctoat, Wismut-ethylhexoat, Zinkacetylacetonat, Eisen-III-acetylacetonat, Zinkchlorid sowie organische und anorganische Zinnverbindungen z.B. Stannoacylate, wie Zinn-II-octoat, Zinn-II-ethylhexoat, Zinn-II-valeriat, Zinn-II-acetat und Zinn-II-laurat, oder Dialkylzinnsalze von Carbonsäuren, wie z.B. Dibutylzinn-diacetat, Dibutylzinn-dilaurat, Dibutylzinnmalat oder Dioctylzinn-diacetat, oder anorganische Salze, wie z.B.

Zinn-II-chlorid und Zinn-IV-chlorid. Zinn-IV-chlorid ist besonders bevorzugt.

Die beispielhaft genannten Katalysatoren können allein oder im Gemisch miteinander eingesetzt werden. Die Katalysatoren werden in katalytischen Mengen, d.h. in einer Menge von 0,005 bis 5 Gew.-%, bevorzugt 0,05 bis 2,5 Gew.-% und besonders bevorzugt von 0,2 bis 1,5 Gew.-%, bezogen auf beim erfindungsgemässen Verfahren einzusetzendes Polyurethan, eingesetzt.

Beim erfindungsgemässen Verfahren können pro 100 Gew.-Teilen Polyisocyanat bis zu 70, vorzugsweise 10 bis 50 Gew.-Teile Polyurethan eingesetzt werden. Falls bei Raumtemperatur feste Polyisocyanate mit einem unter 50 °C liegenden Schmelzpunkt eingesetzt werden, empfiehlt es sich, pro 100 g Polyisocyanat nur ca. 4–15 g Polyurethan einzusetzen, um zu gewährleisten, dass flüssige Verfahrensprodukte entstehen. Je nach Mengenverhältnis der Ausgangsmaterialien und Viskosität des Polyisocyanats schwankt die Viskosität der erfindungsgemäss erhaltenen Gemische bei 25 °C zwischen 50 und 20 000 mPas.

Das erfindungsgemässe Verfahren wird innerhalb eines Temperaturbereichs von 100–250 °C, vorzugsweise 110 bis 190 °C und besonders bevorzugt 130 bis 170 °C, gegebenenfalls unter erhöhtem Druck, durchgeführt. Die erfindungsgemässe Umsetzung, d.h. das Entstehen von vergleichsweise niedrigviskosen Gemischen des im Überschuss eingesetzten Polyisocyanats und des beim erfindungsgemässen Verfahren entstehenden Umsetzungsprodukts aus dem Polyurethan und dem Polyisocyanat, dessen Konstitution nicht genau bekannt ist, ist im allgemeinen nach wenigen Minuten beendet (vgl. erfindungsgemässe Ausführungsbeispiele).

Zur Durchführung des erfindungsgemässen Verfahrens werden die Polyurethanabfälle bzw. die Polyurethanausschussware vorzugsweise in geeigneter Weise zerschnitten, zerrissen oder vermahlen, um die Oberfläche der Partikel zu vergrössern und dadurch die Spaltreaktion zu beschleunigen. Diese Partikel werden dann in das auf die angegebene Reaktionstemperatur vorerhitzte Polyisocyanat-Katalysator-Gemisch – im folgenden «Löser» genannt – zweckmässigerweise derart eingetragen, dass neue Partikel erst dann zugegeben werden, wenn die anderen sich im Löser aufgelöst haben. Bei kleineren Ansätzen und am Anfang der Reaktion können die Polyurethanpartikel auch in den kalten bzw. mässig erwärmten Löser eingetragen werden und zusammen mit diesem auf die Reaktionstemperatur gebracht werden. Bei den angegebenen Temperaturen sind die Spaltreaktionen bei Verwendung der erfindungsgemässen Katalysatoren oft schon nach Sekunden, in weniger günstigen Fällen nach Minuten, beendet.

Geschäumte Formteile können auch als Ganzes in den erfindungsgemässen Löser gegeben werden. Bei 150 °C sind geschäumte Teile von z.B. $22 \times 18 \times 12$ cm$^3$ innerhalb 1 bis 5 Minuten völlig gelöst. Zur Beschleunigung des Lösevorganges ist ein Umwälzen des Lösers durch Rühren, durch Bewegen der zugegebenen Formteile oder durch Umpumpen des Lösers angebracht. Formschäume mit integraler Oberfläche werden sowohl als ganze Teile in ca. 2 bis 15 Minuten als auch in grob zerkleinerter Form (z.B. $2 \times 3 \times 3$ cm) in 1 bis 2 Minuten gelöst.

Für Formteile mit eingeschäumten Stützelementen (z.B. Autokopfstützen, Autositze und Sitzelemente, ist das erfindungsgemässe Verfahren von besonderem Vorteil. Nach Ablösen der Polyurethanschicht können metallische Stützteile sowie unter den Versuchsbedingungen nicht lösliche, nicht quellende oder thermoplastisch nicht verformbare Kunststoff-Stützelemente aus dem Löser herausgenommen und ohne weitere Reinigung erneut zur Herstellung von Formteilen eingesetzt werden. In Anbetracht der oft mit grosser Präzision und hohem Arbeitsaufwand hergestellten Stütz- und Federelemente bedeutet dies eine beträchtliche Kostenersparnis für den PU-Formteil-Hersteller.

Man kann grundsätzlich umgekehrt wie oben beschrieben vorgehen, d.h. die Gesamtmenge des Polyurethans mit dem erfindungsgemässen Löser vermischen oder den Löser dem Polyurethan zugeben. Vor allem bei Schaumstoffen (wegen deren grossen Volumens) ist eine solche Arbeitsweise jedoch unzweckmässig.

Eine vorteilhafte Variante des erfindungsgemässen Verfahrens wird in folgender Weise ausgeführt:

Die NCO-funktionelle Löserkomponente – z.B. 300 g Toluylendiisocyanat – wird unter Ausschluss von Feuchtigkeit unter Rühren erwärmt und bei 80 bis 120 °C der Spaltkatalysator – z.B.

1 g– zugesetzt. Es wird bis zum Erreichen der Reaktionstemperatur – z.B. 150 °C – weiter erwärmt und der Polyurethan-Abfall – z.B. 65 g Weichschaumflocken – so schnell wie möglich – (z.B. über 6 Minuten) – portionsweise in den Löser eingetragen. Es wird noch das ein- bis dreifache der für den PU-Abfall-Zusatz benötigten Zeit nachgerührt und abkühlen lassen.

Das erfindungsgemässe Verfahren erlaubt es, anfallende Polyurethankunststoffabfälle bzw. -ausschussware drucklos mit einfachen Rührapparaturen zu OH-reaktiven Verbindungen aufzuarbeiten. In Folge der Einfachheit des Verfahrens wird so dem Hersteller oder Verarbeiter von Polyurethankunststoffen die Möglichkeit gegeben, Abfälle direkt in wiedereinsetzbare Produkte umzuwandeln, wodurch Lager-, Transport- und Beseitigungskosten verringert werden. Ausserdem gestattet die erfindungsgemäss eröffnete Möglichkeit der Wiederverwendung von Polyurethanabfällen eine erhebliche Verminderung der Umweltbelastung durch auf Deponien gelagerte Polyurethankunststoffabfälle.

Ein besonderer Vorteil des erfindungsgemässen Verfahrens liegt darin, dass es wegen der sehr rasch verlaufenden Aufspaltreaktion kontinuierlich gestaltet werden kann. Nach einer erfindungsgemäss bevorzugten Verfahrensvariante bringt man Polyurethanabfälle und den erfindungsgemässen Löser gleichzeitig oder an getrennten Stellen in eine Schneckenmaschine ein, welche zweckmässigerweise in der Fliessrichtung vor der Eingabestelle mit einer Entgasungseinrichtung versehen ist, um die mit dem Polyurethan eingebrachte Luft zu entfernen. Dies hat den Vorteil, dass während der erfindungsgemässen Abbaureaktion keine durch den Luftsauerstoff bewirkten Nebenreaktionen eintreten können. Insbesondere wenn unter Druck gearbeitet werden soll (z.B. Verwendung von Hexamethylendiisocyanat), bedient man sich vorteilhafterweise maschineller Einrichtungen, wie sie in der DE-OS 2 442 387 beschrieben werden. Durch einen einfachen Vorversuch lässt sich bei dieser bevorzugten Variante des erfindungsgemässen Verfahrens jeweils leicht abschätzen, wie Verweilzeit des Reaktionsgemisches und Temperaturführung im Extruder aufeinander abgestimmt werden müssen, damit ein vollständiger Abbau des eingebrachten Polyurethans gewährleistet ist.

Die erfindungsgemässen Verfahrensprodukte stellen bei Raumtemperatur Flüssigkeiten des angegebenen Viskositätsbereichs dar, die im allgemeinen eine gute Lagerstabilität aufweisen. Die Lagerstabilität insbesondere von mit neutralen Katalysatoren hergestellten Verfahrensprodukten kann erforderlichenfalls durch Zusatz von beispielsweise organischen Säurechloride wie Benzoylchlorid erhöht werden. Bei Einsatz nicht eingefärbter Polyurethane gelangt man beim erfindungsgemässen Verfahren zu hellgelben bis gelben Flüssigkeiten. Die flüssigen Gemische enthalten weder Gelkörper noch sonstige amorphe oder kristalline Niederschläge.

Die nachfolgenden Beispiele dienen zur näheren Erläuterung der Erfindung. Wenn nicht anders vermerkt, beziehen sich alle Angaben in Teilen bzw. Prozenten auf Gewichtsteile bzw. Gewichtsprozente.

In den nachfolgenden Beispielen wurden folgende Polyurethane eingesetzt:

Polyurethan I

Es handelt sich um einen weichen, offenzelligen Polyether-Polyurethanschaumstoff, der auf folgende Weise hergestellt wurde

100 Gew.-Teile eines aus Propylenoxid und Ethylenoxid mit 1,2-Propylenglykol und Trimethylolpropan als Starter aufgebauten Polyethers mit einer OH-Zahl von 49,
4 Gew.-Teile Wasser,
1,2 Gew.-Teile eines Polyethersiloxans,
0,2 Gew.-Teile Triethylendiamin und
0,25 Gew.-Teile des Zinn-(II)-Salzes der 2-Ethylcapronsäure werden miteinander gut vermischt. Zu dieser Mischung werden
50 Gew.-Teile Toluylendiisocyanat (80% 2,4- und 20% 2,6-Isomeres) zugesetzt und mit einem hochtourigen Rührer gut vermischt. Nach einer Startzeit von ca. 10 Sekunden beginnt die Schaumreaktion und es entsteht ein weisser, weicher elastischer Polyurethanschaumstoff, der offenporig ist, ein Raumgewicht von 38 kg/m$^3$ besitzt und theoretisch mit einem Überschuss von 0,02 NCO-Äquivalenten vernetzt ist. (Kennzahl 102). Es wird zwei Stunden bei 100 °C ausgehärtet.

Polyurethan II

Es handelt sich um einen weichen, offenzelligen Polyether-Polyurethanschaumstoff, der nach der folgenden Vorschrift hergestellt wurde:
100 Gew.-Teile eines auf Trimethylolpropan gestarteten und mit Ethylenoxid und Propylenoxid aufgebauten Polyethers mit der OH-Zahl 35, 5,5 Gew.-Teile Wasser, 1,4 Gew.-Teile eines Polyethersiloxans, 0,15 Gew.-Teile Permethyl-diethylentriamin und 0,25 Gew.-Teile des Zinn(II) salzes der 2-Ethylcapronsäure werden miteinander gut vermischt. Zu dieser Mischung werden unter starkem Rühren 61,5 Gew.-Teile Toluylendiisocyanat (65% 2,4- und 35% 2,6-Isomeres) gegeben. Man lässt den Schaumstoff 2 Stunden bei 100 °C und noch 14 Tage bei Raumtemperatur aushärten. Anschliessend wird der Block zu Würfeln von ca. 2 cm Kantenlänge zerschnitten.

Polyurethan III

Es handelt sich um einen halbharten, geschäumten Polyurethanschaumstoff mit kompakter Oberfläche, der aus der Kopfstütze eines handelsüblichen Personenwagens (Ford-Escort) abgetrennt und in Scheiben mit den Abmessungen 2 × 3 × 3 cm$^3$ geschnitten wurde.

Polyurethan IV

Es handelt sich um einen geschlossenzelligen Polyurethanhartschaum, der wie folgt hergestellt wurde:

75 Teile eines aus Propylenoxid, mit einem Gemisch von Saccharose, Trimethylolpropan und Wasser als Starter, aufgebauten Polyethers mit einer OH-Zahl von 380
15 Teile einer auf dem Umsetzungsprodukt von Diethylphosphit, Formaldehyd und Diethanolamin gestarteten Polyhydroxylverbindung (OH-Zahl 450),
10 Teile Rizinusöl,
1 Teil einer wässrigen Lösung eines Fettsäuresulfonats 2 Teile eines handelsüblichen Dispergiermittels,
1,5 Teile eines Polyethersiloxans
28 Teile Frigen und
0,8 Teile Triethylamin
werden gut gemischt.

Zu dieser Mischung werden 110 Teile eines technischen Diphenylmethandiisocyanats mit einem Isocyanatgehalt von 31% zugegeben und mit einem hochtourigen Rührer gut vermischt. Nach einer Startzeit von ca. 10–20 sec. entsteht ein harter, gelber bis bräunlicher Polyurethanschaum, der geschlossenzellig ist und ein Raumgewicht von 28–30 kg/m$^3$ besitzt. Nach einer Aushärtungszeit von mehreren Tagen wird dieser Polyurethanhartschaumstoff in kleinere Partikel vermahlen.

Polyurethan V

Neben 60 Gew.-Teilen des zur Herstellung des Polyurethans II verwendeten Polyethers werden 20 Gew.-Teile eines auf Glycerin gestarteten und mit Ethylenoxid und Propylenoxid verlängerten Polyethers der OH-Zahl 45, 4,5 Gew.-Teile Wasser, 1,0 Gew.-Teile Polyethersiloxan, 0,1 Gew.-Teile Permethyl-diethylentriamin, 0,35 Gew.-Teile Zinn-II-(2-ethyl)-caproat und 2,0 Gew.-Teile Dodecyl-diphenyl-phosphit miteinander gut vermischt. Nach Zugabe von 55 Gew.-Teilen Toluylendiisocyanat (72,5% 2,4- und 27,5% 2,6-Isomeres) wird gut verrührt. Nach Aushärten (2 Stunden 100 °C und 4 Wochen bei Raumtemperatur) wird der Schaumstoff geflockt.

Polyurethan VI

Es handelt sich um verflockte Polyurethan-Weichschaum-Abfälle unbekannter Zusammensetzung.

Beispiel 1

Bei 100 °C werden 300 g eines Gemisches aus 80 Teilen 2,4- und 20 Teilen 2,6-Diisocyanatotoluol unter Rühren mit 1 g Zinn-II-chlorid versetzt. Das Gemisch wird auf 150 °C erwärmt. Anschliessend werden 130 g des Polyurethans I in Form von Flocken portionsweise unter Rühren zu dem Diisocyanat gegeben, wobei durch Heizen eine Temperatur von 150 °C aufrechterhalten wird. Die Schaumstoffzugabe ist bereits nach 8 Minuten beendet, nach weiteren 3 Minuten liegt eine klare Lösung vor. Es wird noch 15 Minuten bei 150 °C nachgerührt und abkühlen lassen. Das resultierende Gemisch besitzt bei einem Isocyanatgehalt von 27,3% eine bei 25 °C gemessene Viskosität von 5900 mPas.

Bei einer Wiederholung des Versuchs, jedoch ohne Mitverwendung des Zinn-Katalysators werden zur Schaumstoffzugabe 50 Minuten benötigt. Erst nach weiteren 5 Minuten ist der Schaum völlig gelöst. Das Gemisch wird noch 15 Minuten bei 150 °C gerührt und danach auf Raumtemperatur abkühlen gelassen. Man erhält ein Gemisch mit einem NCO-Gehalt von 22,4% und einer Viskosität bei 50 °C von 261 000 mPas.

Beispiel 2

300 g des in Beispiel 1 genannten Diisocyanat-Isomerengemischs werden bei 100 °C mit 2,4 g Zinn-II-bromid verrührt. Anschliessend wird das Gemisch auf 150 °C erhitzt und 170 g des würfelförmigen Polyurethans II wie in Beispiel 1 beschrieben eingetragen. Die Schaumstoffzugabe (= Mischzeit $t_M$) nahm 25 Minuten in Anspruch. Nach weiteren 6 Minuten (= Lösezeit $t_L$) war das Polyurethan restlos gelöst. Es wird während weiterer 15 Minuten unter Rühren bei 150 °C gehalten und anschliessend abgekühlt. Man erhält ein flüssiges Gemisch mit einem Isocyanatgehalt von 25,7% und einer Viskosität bei 25 °C von 17 200 mPas.

Zum Vergleich wurde das Beispiel wiederholt, jedoch ohne Zugabe des Zinn-Katalysators. Die Schaumstoffzugabe erfordert hier einen Zeitaufwand von 250 Minuten, anschliessend musste noch während 140 Minuten bei 150 °C nachgerührt werden. Das Reaktionsgemisch wies einen NCO-Gehalt von 19,7% auf und verfestigte sich beim Abkühlen auf Raumtemperatur.

Beispiel 3

65 g des Polyurethans III werden wie in Beispiel 1 beschrieben in ein Gemisch aus 300 g des in Beispiel 1 beschriebenen Diisocyanato-toluol-Isomerengemischs mit 1 g Zinn-II-(2-ethylcapronat) eingetragen und umgesetzt. Das Polyurethan geht innerhalb von 10 Minuten in Lösung. Das resultierende Gemisch weist einen NCO-Gehalt von 27,9% und bei 25 °C eine Viskosität von 6 200 mPas auf

Eine Wiederholung des Versuchs jedoch ohne Mitverwendung des erfindungswesentlichen Katalysators machte eine Reaktionsdauer von 80 Minuten erforderlich. Die Viskosität des erhaltenen Gemischs war so hoch, dass sie bei Raumtemperatur nicht mehr gemessen werden konnte.

Beispiel 4

65 g des Polyurethans IV (gemahlener Polyurethanhartschaumstoff) werden analog Beispiel 1 bei 170 °C in ein bei 100 °C hergestelltes Gemisch aus 300 g des in Beispiel 1 beschriebenen Diisocyanatotoluol-Isomerengemischs mit 1 g Zinn-IV-chlorid eingetragen. Die Schaumstoffzugabe ist bereits nach 7 Minuten beendet. Es wird noch 13 Minuten bei 170 °C nachgerührt. Das dünnflüssige Gemisch weist einen NCO-Gehalt von 33,6% und bei 25 °C eine Viskosität von 272 mPas auf.

Zum Vergleich wurde dieses Beispiel wiederholt, jedoch ohne Mitverwendung des erfindungswesentlichen Katalysators. Nach 2 Stunden Reaktionsdauer lag der Hartschaumstoff noch immer als gequollene, ungelöste Masse vor.

Beispiel 5

Wie in Beispiel 1 beschrieben, werden 100 g des Polyurethans I bei 150 °C mit einer Mischung aus 300 g des in Beispiel 1 beschriebenen Diisocyanatotoluol-Isomerengemischs und 1 g Zinn-II-chlorid zur Reaktion gebracht. Die Schaumstoffzugabe ist bereits nach 5 Minuten beendet. Nach weiteren 3 Minuten ist eine Lösung des Polyurethans entstanden, die noch während weiterer 15 Minuten bei 150 °C gerührt wird. Nach Abkühlen auf Raumtemperatur liegt ein flüssiges Gemisch mit einem NCO-Gehalt von 32,5% und einer Viskosität bei 25 °C von 204 mPas vor. Auch nach 4-wöchiger Lagerung bei Raumtemperatur ist das Produkt noch dünnflüssig.

Zum Vergleich wurde dieses Beispiel wiederholt, jedoch ohne Mitverwendung des erfindungswesentlichen Katalysators. Die Schaumstoffzugabe erforderte 45 Minuten. Nach weiteren 5 Minuten war das Polyurethan gelöst und es wurde noch 15 Minuten bei 150 °C nachgerührt. Das viskose, aber noch fliessfähige Produkt wies einen NCO-Gehalt von 24,3% auf. Nach 2-tägiger Lagerung bei Raumtemperatur war es zu einem Feststoff erstarrt.

Beispiel 6

Analog Beispiel 1 werden 65 g des Polyurethans V mit 300 g des in Beispiel 1 beschriebenen Diisocyanatotoluol-Isomerengemischs und 1 g Zinn-IV-chlorid umgesetzt. Bei einer Mischzeit $t_M$ von 15 Minuten und einer Nachrührzeit $t_R$ von 15 Minuten resultiert ein dünnflüssiges Gemisch mit einem NCO-Gehalt von 37,2% und einer Viskosität bei 25 °C von nur 58 mPas. Nach 3-monatiger Lagerung bei Raumtemperatur weist das Gemisch eine Viskosität bei 25 °C von 73 mPas auf.

Beispiel 7–10

Es wird wie in Beispiel 6 verfahren, jedoch statt SnCl$_4$ werden je 1 g der in Tabelle 1 genannten Spaltkatalysatoren eingesetzt.

Tabelle 1

| Beispiel | Spalt-Katal. | $t_M$ (Min.) | $t_R$ (Min.) | NCO-Gehalt (%) | Viskosität bei 25 °C (mPas) |
|---|---|---|---|---|---|
| 6 | SnCl$_4$ | 15 | 15 | 37,2 | 58 |
| 7 | SnCl$_2$ | 12 | 10 | 36,1 | 258 |
| 8 | Bi-Octoat | 10 | 10 | 27,8 | 1200 |
| 9 | Fe-III-acac* | 15 | 30 | 33,7 | 167 |
| 10 | Zn-II-acac* | 8 | 15 | 35,5 | 99 |

*) acac = Acetylacetonat

Beispiel 11

Es wird wie in Beispiel 6 verfahren, jedoch an Stelle von SnCl$_4$ wird 1 g Zinn-II-octoat zugemischt. Während des Abkühlens werden dem Produkt bei 130 °C noch 1 g Benzoylchlorid zugemischt.

Analytische und präparative Daten:

$t_M$ = 4 Minuten
$t_R$ = 10 Minuten
% NCO = 34,2
Viskosität bei 25 °C = 146 mPas und
nach 3 Monaten     206 mPas.

Beispiel 12

Analog Beispiel 6 werden 2600 g Polyurethan VI mit 6000 g des in Beispiel 1 beschriebenen Diisocyanatotoluol-Isomerengemischs in Gegenwart von 20 g Zinn-IV-chlorid umgesetzt. Es resultiert ein flüssiges Gemisch mit einem NCO-Gehalt von 28,9% und einer Viskosität bei 25 °C von 652 mPas.

Verwendung

100 Teile des bei der Herstellung des Polyurethans I eingesetzten Polyethers der OH-Zahl 49,
5 Gew.-Teile Wasser,
1,2 Gew.-Teile eines Polyethersiloxans,
0,2 Gew.-Teile Triethyldiamin und

0,25 Gew.-Teile Zinn-II-(2-ethyl)-caproat werden miteinander verrührt. Zu dieser Mischung werden 106 Gew.-Teile des oben beschriebenen flüssigen Gemischs zugesetzt und mit einem hochtourigen Rührer während 10 Sekunden gut vermischt. Nach einer Startzeit von 20 Sekunden beginnt die Schaumreaktion. Nach 2 Stunden Aushärten bei 100 °C und Aufdrücken des Anteils an geschlossenen Zellen erhält man einen weichen, elastischen Polyurethanschaumstoff.

Beispiel 13

Bei 100 °C werden unter Rühren 300 g 4,4'-Diphenylmethandiisocyanat unter Stickstoff mit 0,1 g SnCl$_4$ versetzt. Es wird weiter bis auf 150 °C erwärmt, und innerhalb 5 Minuten werden 15 g Polyurethan V zugegeben. Nach weiteren 130 Minuten Rühren bei 150 °C wird abgekühlt. Nach Abtrennen von wenig hochschmelzenden Feststoff erhält man ein bei Raumtemperatur flüssiges, modifiziertes Diphenylmethandiisocyanat mit der Viskosität $\eta 25$ °C = 180 mPas.

Werden 300 g 4,4'-Diphenylmethandiisocyanat alleine oder unter Zusatz von 0,1 g SnCl$_4$ unter denselben Bedingungen wie oben 135 Minuten lang bei 150 °C gerührt, erstarrt das Produkt bei Abkühlen auf Raumtemperatur vollständig.

## Patentansprüche

1. Verfahren zur Herstellung von als Isocyanatkomponente bei der Herstellung von Polyurethankunststoffen geeigneten, bei Raumtemperatur flüssigen Gemischen von Isocyanatgruppen aufweisenden Verbindungen durch Umsetzung von bis zu 70 Gewichtsteilen an Polyurethanen mit 100 Gewichtsteilen an organischen Polyisocyanaten mit einem unter 50 °C liegenden Schmelz- bzw. Erweichungspunkt im Temperaturbereich zwischen 100 und 250 °C, gegebenenfalls unter Anwendung von äusserem Druck, dadurch gekennzeichnet, dass man die Umsetzung in Gegenwart von katalytischen Mengen an sauren oder neutralen Salzen, Phenolaten, Enolaten oder Alkoholaten von Metallen der 3., 4. oder 5. Hauptgruppe oder der 1., 2., 4., 7. oder 8. Nebengruppe des Periodensystems der Elemente durchführt.

2. Verfahren gemäss Anspruch 1, dadurch gekennzeichnet, dass man als Polyurethane Polyurethanabfälle oder Polyurethanausschussware verwendet.

3. Verfahren gemäss Anspruch 1 und 2, dadurch gekennzeichnet, dass man als Polyisocyanate bei Raumtemperatur flüssige Polyisocyanate verwendet.

4. Verfahren gemäss Anspruch 1 bis 3, dadurch gekennzeichnet, dass man als Polyisocyanate 2,4-Diisocyanatotoluol, dessen Gemische mit 2,6-Diisocyanatotoluol, flüssige Phosgenierungsprodukte von Anilin/Formaldehyd-Kondensaten oder Hexamethylendiisocyanat verwendet.

5. Verfahren gemäss Anspruch 1 bis 4, dadurch gekennzeichnet, dass man als Katalysatoren Salze, Enolate oder Phenolate des 2- oder 4-wertigen Zinns, des Zinks, des 3-wertigen Eisens oder des 3-wertigen Wismuts verwendet.

6. Verfahren gemäss Anspruch 1 bis 5, dadurch gekennzeichnet, dass man als Katalysator Zinntetrachlorid verwendet.

7. Verwendung der gemäss Anspruch 1 bis 6 erhältlichen flüssigen Gemische als Isocyanatkomponente bei der Herstellung von Polyurethankunststoffen nach dem Isocyanat-Polyadditionsverfahren.

## Revendications

1. Procédé de préparation de mélanges de composés comportant des groupes isocyanate, ces mélanges étant liquides à la température ambiante et appropriés comme composant isocyanate lors de la fabrication de matières synthétiques de polyuréthanes, par réaction de polyuréthanes en une quantité allant jusqu'à 70 parties en poids avec 100 parties en poids de polyisocyanates organiques ayant un point de fusion ou de ramollissement inférieur à 50 °C, à une température se situant dans l'intervalle allant de 100 à 250 °C, en appliquant éventuellement une pression extérieure, caractérisé en ce qu'on effectue la réaction en présence de quantités catalytiques d'alcoolates, d'énolates, de phénolates ou de sels acides ou neutres de métaux du troisième, du quatrième ou du cinquième groupe principal ou du premier, du deuxième, du quatrième, du septième ou du huitième sous-groupe du Système Périodique des Eléments.

2. Procédé suivant la revendication 1, caractérisé en ce que, comme polyuréthanes, on utilise des déchets ou des rebuts de polyuréthanes.

3. Procédé suivant les revendications 1 et 2, caractérisé en ce que, comme polyisocyanates, on utilise des polyisocyanates líquides à la température ambiante.

4. Procédé suivant les revendications 1 à 3, caractérisé en ce que, comme polyisocyanates, on utilise le 2,4-diisocyanato-toluène, ses mélanges avec le 2,6-diisocyanato-toluène, des produits liquides de phosgénation de condensats d'aniline/formaldéhyde ou l'hexaméthylène-diisocyanate.

5. Procédé suivant les revendications 1 à 4, caractérisé en ce que, comme catalyseurs, on utilise des sels, des énolates ou des phénolates de l'étain bivalent ou tétravalent, du zinc, du fer trivalent ou du bismuth trivalent.

6. Procédé suivant les revendications 1 à 5, caractérisé en ce que, comme catalyseur, on utilise le tétrachlorure d'étain.

7. Utilisation des mélanges liquides obtenus suivant les revendications 1 à 6 comme composant isocyanate lors de la fabrication de matières synthétiques de polyuréthanes conformément au procédé de polyaddition d'isocyanate.

## Claims

1. A process for the production of mixtures of compounds having isocyanate groups, which mixtures are liquid at room temperature and are suitable as an isocyanate component in the production of polyurethane plastics materials, by reacting up to 70 parts by weight of polyurethanes with 100 parts by weight of organic polyisocyanates with a melting or softening point below 50 °C in a temperature range of between 100 and 250 °C, optionally using external pressure, characterised in that the reaction is carried out in the presence of catalytic quantities of acid or neutral salts, phenolates, enolates or alcoholates of metals of the 3rd, 4th or 5th main group or of the 1st, 2nd, 4th, 7th or 8th subsidiary group of the periodic systems of elements.

2. A process according to claim 1, characterised in that polyurethane waste materials or polyurethane reject goods are used as polyurethanes.

3. A process according to claim 1 or 2, characterised in that polyisocyanates which are liquid at room temperature are used as polyisocyanates.

4. A process according to claim 1 to 3, characterised in that 2,4-diisocyanatotoluene, the mixtures thereof with 2,6-diisocyanatotoluene, liquid phosgenation products of aniline/formaldehyde condensates or hexamethylene diisocyanate are used as polyisocyanates.

5. A process according to claim 1 to 4, characterised in that salts, enolates or phenolates of di- or tetravalent tin, zinc, trivalent iron or of trivalent bismuth are used as catalysts.

6. A process according to claim 1 to 5, characterised in that tin tetrachloride is used as a catalyst.

7. The use of the liquid mixtures which may be obtained according to claim 1 to 6 as an isocyanate component in the production of polyurethane plastics materials according to the isocyanate-polyaddition process.